# EUROPÄISCHE PATENTSCHRIFT

(11) **EP 1 064 470 B1**
(45) Veröffentlichungstag und Bekanntmachung des Hinweises auf die Patenterteilung: **09.04.2003**
(21) Anmeldenummer: 00903576.7
(22) Anmeldetag: 13.01.2000
(51) Int. Cl.: F16D 35/00, F16D 47/06

(54) **STEUERBARE KUPPLUNG**
CONTROLLABLE CLUTCH
EMBRAYAGE REGULABLE

(30) Priorität: 22.01.1999 DE 19902388
(43) Veröffentlichungstag der Anmeldung: 03.01.2001
(73) Patentinhaber: GKN Automotive GmbH, 53797 Lohmar (DE)
(72) Erfinder: HÖCK, Michael, D-53819 Neunkirchen-Seelscheid (DE); MÄTZSCHKER, Klaus, D-53819 Neunkirchen (DE)
(74) Vertreter: Neumann, Ernst Dieter, Dipl.-Ing.
(86) Internationale Anmeldenummer: EP0000197
(87) Internationale Veröffentlichungsnummer: WO00043691

(56) Entgegenhaltungen:
- EP-A- 0 314 420
- DE-A- 3 630 975
- DE-A- 19 650 039
- DE-C- 424 978

## Beschreibung

Die Erfindung betrifft eine Kupplung, die der regelbaren Übertragung von Drehmoment dient, sowie ein Verfahren zu ihrer Steuerung. Die Kupplung umfaßt ein erstes Kupplungsglied und ein zweites Kupplungsglied - insbesondere eine Welle und ein Kupplungsgehäuse -, die relativ drehbar zueinander gelagert sind; die Kupplung umfaßt in Parallelschaltung eine Reibungskupplung und eine Viscokupplung; die Reibungskupplung umfaßt zwei Reiblamellensätze, die Viscokupplung umfaßt zwei VC-Lamellensätze, die jeweils einem von zwei VC-Lamellenträgern zugeordnet sind. Die Reiblamellensätze der Reibungskupplung sind jeweils drehfest mit dem ersten und zweiten Kupplungsglied verbunden und von einer Verstellvorrichtung axial beaufschlagbar, und ein erster VC-Lamellenträger der Viscokupplung ist davernd drehfest mit den ersten der Kupplungsglieder verbuden. Eine derartige kupplung ist aus EP-A-0 314 420 bekannt. Kupplungen der im weiteren beschriebenen Art dienen vorwiegend als Sperren von Ausgleichsgetrieben in Fahrzeugen oder als Sperren zum Zuschalten einer zusätzlichen Antriebsachse in Fahrzeugantrieben.

Aus der DE 38 15 225 C2 ist ein Ausgleichsgetriebe mit einer Reibungskupplung bekannt, für die ein besonders geeigneter gut regelbarer Verstellantrieb vorgeschlagen worden ist.

Eine Kupplung, die ebenfalls dem Sperren eines Ausgleichsgetriebes dient und in Parallelschaltung eine Reibungskupplung und eine Viscokupplung umfaßt, ist aus der DE 34 26 460 C1 bekannt, wobei diese selbsttätig geregelt ist.

Eine weitere Kupplung der obengenannten Art ist aus der DE-OS 22 09 879 bekannt. Hierbei ist die Viscokupplung jedoch nicht als Lamellenkupplung ausgebildet.

Weitere Kupplungen auf dem genannten Gebiet finden sich in WO 86/02133 A1, US 4,031,780, US 4,058,027 sowie schließlich in JP 1-72415 U und JP 63-312235 A.

Der vorliegenden Erfindung liegt die Aufgabe zugrunde, eine besonders gut regelbare Kupplung der genannten Art und ein Verfahren zu ihrer Steuerung bereitzustellen. Die Lösung hierfür besteht in einem Verfahren zur Steuerung einer Kupplung, die der regelbaren Übertragung von Drehmoment dient; die Kupplung umfaßt ein erstes Kupplungsglied und ein zweites Kupplungsglied - insbesondere eine Welle und ein Kupplungsgehäuse -, die relativ drehbar zueinander gelagert sind; die Kupplung umfaßt in Parallelschaltung eine Reibungskupplung und eine Viscokupplung; die Reibungskupplung umfaßt zwei Reiblamellensätze, die Viscokupplung umfaßt zwei VC-Lamellensätze, die jeweils einem von zwei VC-Lamellenträgern zugeordnet sind; das Verfahren ist dadurch gekennzeichnet, daß zum Trennen der Kupplung die Reiblamellensätze der Reibungskupplung axial voneinander getrennt werden und einer der VC-Lamellenträger der Viscokupplung vollständig von einem der Kupplungsglieder entkoppelt wird. Insbesondere wird vorgeschlagen, daß zum zunehmenden Schließen der Kupplung zunächst der eine der VC-Lamellenträger der Viscokupplung an eines der Kupplungsglieder reibschlüssig angekoppelt wird, während der andere der VC-Lamellenträger der Viscokupplung mit dem anderen der Kupplungsglieder ständig drehfest verbunden bleibt, und danach die Reibungskupplung geschlossen wird, wobei die Reiblamellensätze der Reibungskupplung mit jeweils einem der beiden Kupplungsglieder ständig drehfest verbunden bleiben.

Die Lösung besteht im übrigen in einer Kupplung zur regelbaren Übertragung von Drehmoment, mit einem ersten Kupplungsglied und einem zweiten Kupplungsglied - insbesondere einer Welle und einem Kupplungsge-häuse -, die relativ drehbar zueinander gelagert sind; die Kupplung umfaßt in Parallelschaltung eine Reibungskupplung und eine Viscokupplung; die Reibungskupplung umfaßt zwei Reiblamellensätze, die Viscokupplung umfaßt zwei VC-Lamellensätze, die jeweils einem von zwei VC-Lamellenträgern zugeordnet sind; die Reiblamellensätze der Reibungskupplung sind jeweils drehfest mit dem ersten und zweiten Kupplungsglied verbunden und von einer Verstellvorrichtung axial beaufschlagbar und ein erster VC-Lamellenträger der Viscokupplung ist dauernd drehfest mit dem ersten der Kupplungsglieder verbunden und ein zweiter VC-Lamellenträger der Viscokupplung ist mit dem zweiten Kupplungsglied entkoppelbar verbunden, wobei eine Axialverstellvorrichtung den zweiten VC-Lamellenträger der Viscokupplung reibschlüssig an- und abkoppelt und die Reiblamellensätze der Reibungskupplung schließt und löst.

Die erfindungsgemäße Kupplung verbindet die hohe Drehmomentkapazität einer Reibungskupplung mit dem äußerst empfindlichen Ansprechverhalten einer Viscokupplung. Darüber hinaus hat die Kupplung die Eigenschaft, trotz Drehzahldifferenz zwischen den Kupplungsgliedern durch Abkoppeln der Viscokupplung vollkommen trennbar zu sein.

Die Viscokupplung soll nur ein relativ geringes Drehmoment übertragen und benötigt keine Humpfunktion. Durch die verzögerungsfreie und selbstregelnde Funktion der Viscokupplung wird das Regelverhalten verbessert.

Soweit das Kupplungsgehäuse der Viscokupplung in einigen der nachstehenden Ausführungen in der Funktion einer Kupplungslamelle eingesetzt wird, muß das Gehäuse entsprechend stabil ausgeführt sein.

Nach einer Alternative hierzu kann ein Lamellenträger mit dem Kupplungsgehäuse verbunden werden, wobei Reiblamellen auf diesem Lamellenträger mit im zweiten Kupplungsglied gehaltenen Reiblamellen eine gesonderte Hilfsreibungskupplung zur Ankopplung des Viscokupplungsgehäuses bilden.

Als bevorzugte Axialverstellvorrichtungen werden solche vorgeschlagen, wie sie aus der eingangs genannten DE 38 15 225 C2 bekannt sind. Diese können wahlweise mit zwei oder drei Rampenscheiben ausgeführt werden. In der Ausführung mit zwei Rampenscheiben ist eine der Scheiben axial festgehalten und die andere der Scheiben wird bei relativer Verdrehung der beiden Scheiben gegeneinander axial abgespreizt. Bei der Ausführung mit drei Rampenscheiben kann die mittlere axial festgehalten werden und bei relativer Verdrehung der Scheiben gegeneinander, insbesondere durch Verdrehen der mittleren Scheibe, die beiden außenliegenden Rampenscheiben insbesondere über unterschiedliche Verdrehwinkelbereiche nacheinander gegenüber dieser abgespreizt werden.

Die Rampenscheiben stützen sich bevorzugt jeweils mittels dreier in paarigen Rillen gehaltener Kugeln gegeneinander ab.

Die Verstellung der drehbaren Rampenscheibe erfolgt elektromotorisch, wobei der Elektromotor im Stillstand mittels eines federbelasteten Bremslamellenpaketes abgebremst wird. Bei Einschalten des Motors zur Verstellung schaltet zunächst ein Magnet das Bremslamellenpaket frei.

Bevorzugte Ausführungsformen der erfindungsgemäßen Kupplung werden nachstehend anhand der Zeichnungen beschrieben und erläutert.
- Figur 1: zeigt eine Kupplung in einer ersten Ausführung mit axial verschiebbarem Viscokupplungsgehäuse
a) als Prinzipbild
b) in teilweise detaillierter ausgeführter Prinzipdarstellung;
- Figur 2: zeigt eine Kupplung in einer zweiten Ausführung mit axial verschiebbarem Viscokupplungsgehäuse und angegliedertem Lamellenträger
a) als Prinzipbild im Halbschnitt
b) in teilweise detaillierter ausgeführter Prinzipdarstellung;
- Figur 3: zeigt eine Kupplung mit fest abgestütztem Viscokupplungsgehäuse in einer ersten Ausführung
a) als Prinzipbild im Halbschnitt
b) in teilweise detaillierter ausgeführter Prinzipdarstellung;
- Figur 4: zeigt eine Kupplung mit axial abgestütztem Viscokupplungsgehäuse in einer zweiten Ausführung
a) als Prinzipbild im Halbschnitt
b) in teilweise detaillierter ausgeführter Prinzipdarstellung.

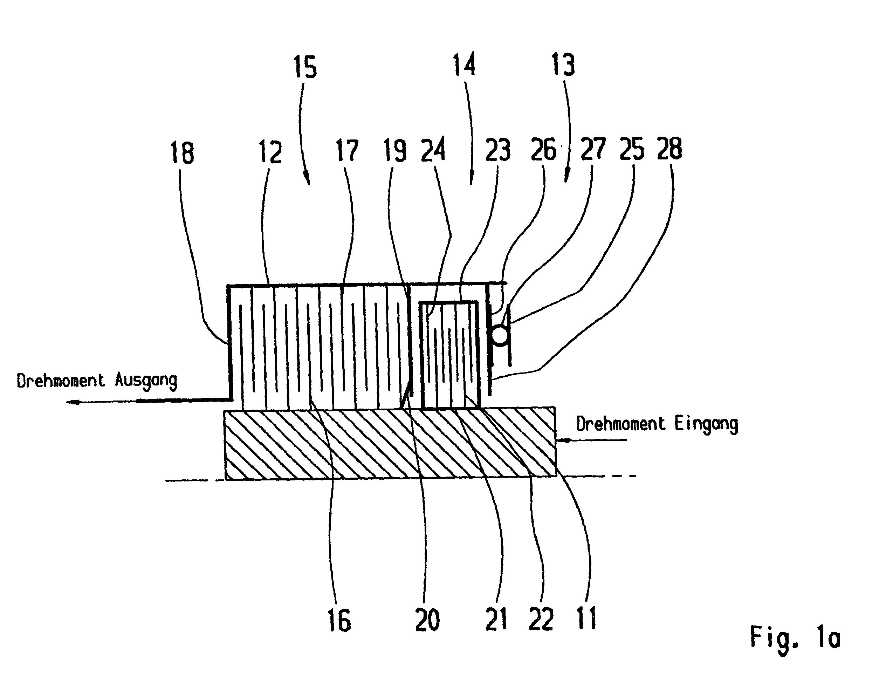

In Figur 1a ist eine Antriebswelle 11 als erstes Kupplungsglied und ein Kupplungsgehäuse 12 als zweites Kupplungsglied erkennbar. Axial hintereinanderliegend sind eine Axialverstellanordnung 13, eine Viscokupplung 14 und eine Reibungskupplung 15 erkennbar. Innere Reiblamellen 16 der Reibungskupplung sind unmittelbar mit der Welle drehfest verbunden. Äußere Reiblamellen 17 der Reibungskupplung sind unmittelbar mit dem Gehäuse 12 drehfest verbunden. Die zwei Lamellensätze können sich an einer Radialwand 18 des Gehäuses abstützen. Eine erste Reiblamelle 19 ist an einer Tellerfeder 20 abgestützt. Die Viscokupplung zeigt einen Innenlamellenträger 21 mit innenliegenden VC-Lamellen 22, die drehfest gegenüber der Welle 11 sind. Weiterhin ist ein Viscokupplungsgehäuse 23 erkennbar, das als Lamellenträger für äußere VC-Lamellen 24 dient. Das Kupplungsgehäuse 23 ist axial verschiebbar. Die Verstellvorrichtung 13 läßt zwei Rampenscheiben 25, 26 erkennen, zwischen denen Kugeln 27 liegen. Die Rampenscheibe 25 ist axial abgestützt. Die Rampenscheibe 26 wirkt über eine Druckscheibe 28 axial auf das Gehäuse 23 der Viscokupplung ein, das sich bei Beaufschlagung zunächst an die Reiblamelle 19 anlegt, die federnd abgestützt ist. Hiermit wird das Viscokupplungsgehäuse 23 an das Gehäuse 12 angekoppelt. Bei weiterer Verstellung schließt sich die Reibungskupplung 15.

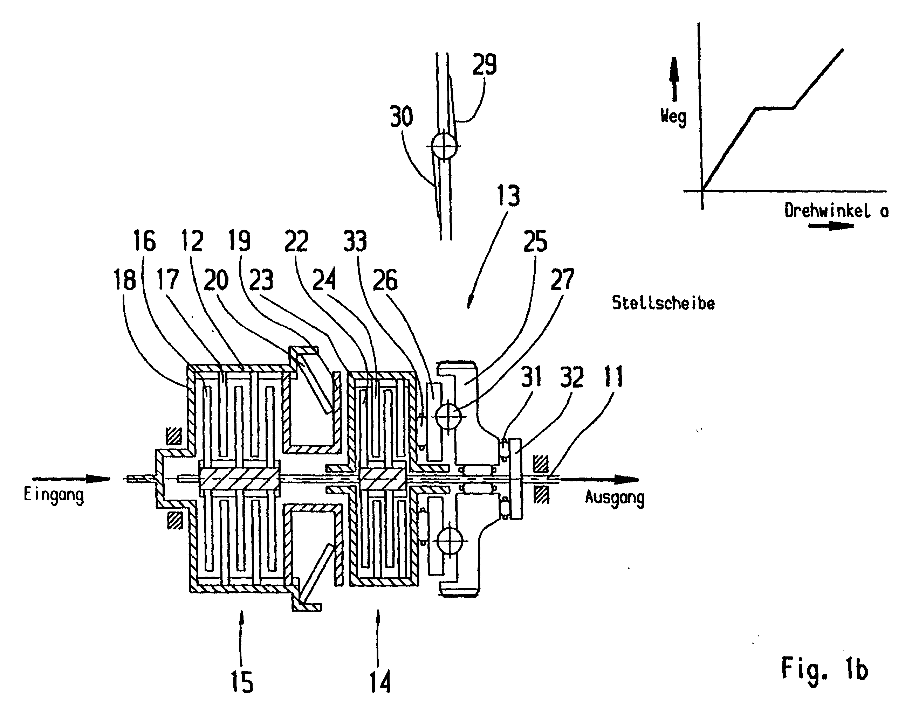

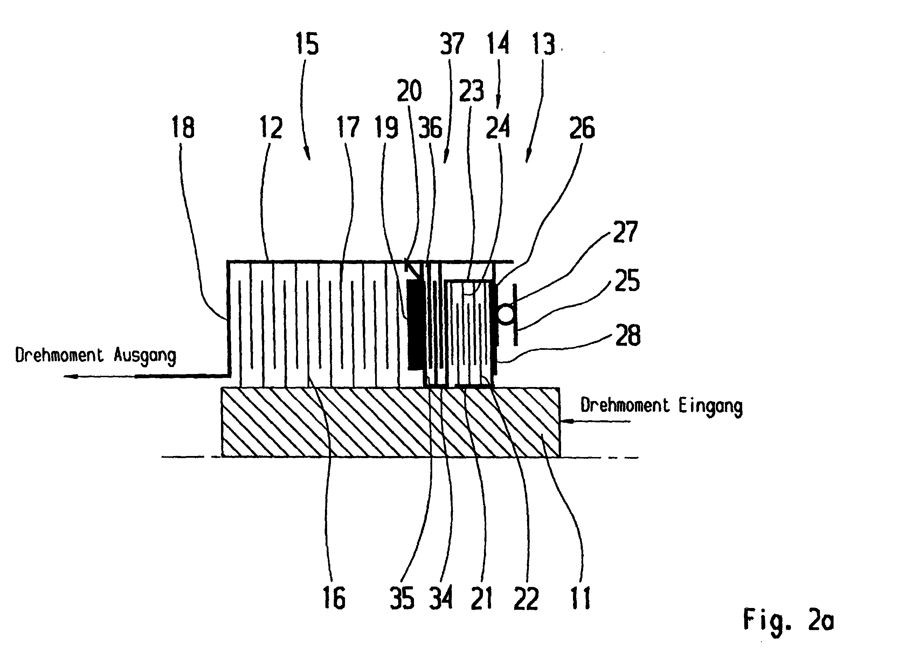

In Figur 1b sind entsprechende Einzelheiten wie in Figur 1a mit gleichen Ziffern dargestellt. In einer Einzelheit ist an den Rampenscheiben der Umfangsverlauf von Kugelrillen 29, 30 erkennbar. Die Rampenscheibe 25 stützt sich über ein Axiallager 31 an einem Wellenabsatz 32 der Welle 11 ab, die Rampenscheibe 26 über ein Axiallager 33 am Viscokupplungsgehäuse 23. In einem Diagramm ist der Axialweg der Rampenscheibe 26 über dem Verdrehwinkel der Rampenscheibe 25 dargestellt, der zunächst der Ankopplung der Viscokupplung dient und anschließend dem Schließen der Reibungskupplung.

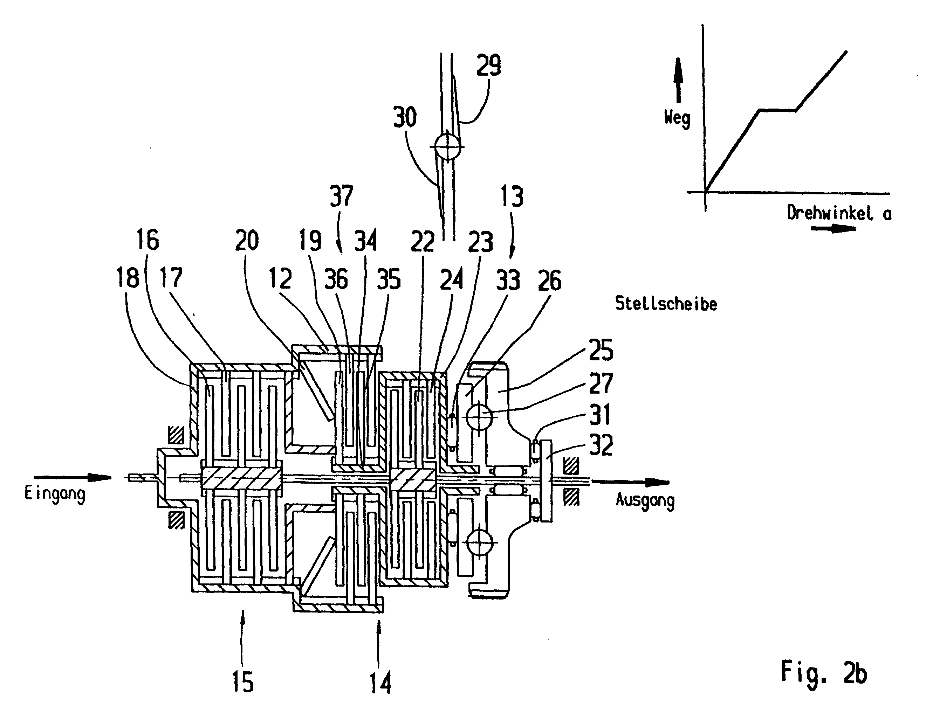

In Figur 2a ist eine Antriebswelle 11 als erstes Kupplungsglied und ein Kupplungsgehäuse 12 als zweites Kupplungsglied erkennbar. Axial hintereinanderliegend sind eine Axialverstellanordnung 13, eine Viscokupplung 14 und eine Reibungskupplung 15 erkennbar. Innere Reiblamellen 16 der Reibungskupplung sind unmittelbar mit der Welle drehfest verbunden. Äußere Reiblamellen 17 der Reibungskupplung sind unmittelbar mit dem Gehäuse 12 drehfest verbunden. Die zwei Lamellensätze können sich an einer Radialwand 18 des Gehäuses abstützen. Eine erste Reiblamelle 19 ist an einer Tellerfeder 20 abgestützt. Die Viscokupplung zeigt einen Innenlamellenträger 21 mit innenliegenden VC-Lamellen 22, die drehfest gegenüber der Welle 11 sind. Weiterhin ist ein Viscokupplungsgehäuse 23 erkennbar, das als Lamellenträger für äußere VC-Lamellen 24 dient. Das Kupplungsgehäuse 23 ist axial verschiebbar. Am Viscokupplungsgehäuse 23 ist ein zusätzlicher Lamellenträger 34 angeordnet, der innere Reiblamellen 35 trägt, die mit äußeren Reiblamellen 36 zusammenwirken, die unmittelbar im Gehäuse 12 drehfest gehalten sind. Diese Reiblamellen bilden eine Hilfsreibungskupplung 37 zum Ankoppeln des Viscokupplungsgehäuses 23 an das Gehäuse 12. Die Verstellvorrichtung 13 läßt zwei Rampenscheiben 25, 26 erkennen, zwischen denen Kugeln 27 liegen. Die Rampenscheibe 25 ist axial abgestützt. Die Rampenscheibe 26 wirkt über eine Druckscheibe 28 axial auf das Gehäuse 23 der Viscokupplung und die Hilfskupplung 37 ein, die sich bei Beaufschlagung zunächst an die Reiblamellen 19 anlegen, die federnd abgestützt ist. Hiermit wird das Viscokupplungsgehäuse 23 an das Gehäuse 12 angekoppelt. Bei weiterer Verstellung schließt sich die Reibungskupplung 15.

In Figur 2b sind entsprechende Einzelheiten wie in Figur 1a mit gleichen Ziffern dargestellt. In einer Einzelheit ist an den Rampenscheiben der Umfangsverlauf von Kugelrillen 29, 30 erkennbar. Die Rampenscheibe 25 stützt sich über ein Axiallager 31 an einem Wellenabsatz 32 der Welle 11 ab, die Rampenscheibe 26 über ein Axiallager 33 am Viscokupplungsgehäuse 23. In einem Diagramm ist der Axialweg der Rampenscheibe 26 über dem Verdrehwinkel der Rampenscheibe 25 dargestellt, der zunächst der Ankopplung der Viscokupplung dient und anschließend dem Schließen der Reibungskupplung.

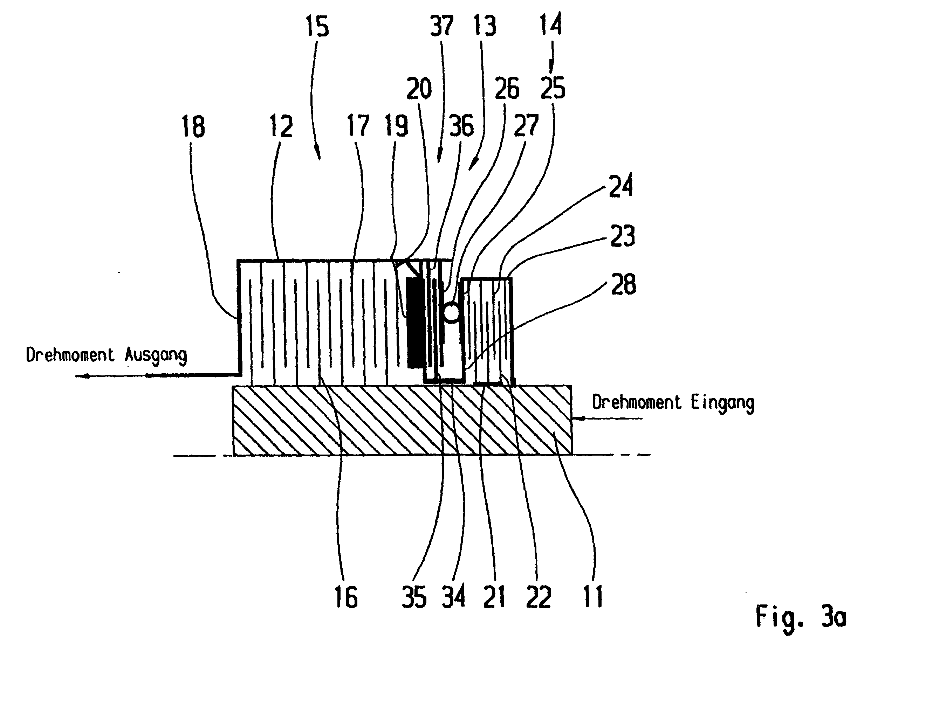

In Figur 3a ist eine Antriebswelle 11 als erstes Kupplungsglied und ein Kupplungsgehäuse 12 als zweites Kupplungsglied erkennbar. Axial hintereinanderliegend sind eine Viscokupplung, eine Axialverstellanordnung 13 und eine Reibungskupplung 15 erkennbar. Innere Reiblamellen 16 der Reibungskupplung sind unmittelbar mit der Welle drehfest verbunden. Äußere Reiblamellen 17 der Reibungskupplung sind unmittelbar mit dem Gehäuse 12 drehfest verbunden. Die zwei Lamellensätze können sich an einer Radialwand 18 des Gehäuses abstützen. Eine erste Reiblamelle 19 ist an einer Tellerfeder 20 abgestützt. Die Viscokupplung zeigt einen Innenlamellenträger 21 mit innenliegenden VC-Lamellen 22, die drehfest gegenüber der Welle 11 sind. Weiterhin ist ein Viscokupplungsgehäuse 23 erkennbar, das als Lamellenträger für äußere VC-Lamellen 24 dient. Das Kupplungsgehäuse 23 ist axial abgestützt. Am Viscokupplungsgehäuse 23 ist ein zusätzlicher Lamellenträger 34 angeordnet, der innere Reiblamellen 35 trägt, die mit äußeren Reiblamellen 36 zusammenwirken, die unmittelbar im Gehäuse 12 drehfest gehalten sind. Diese Reiblamellen bilden eine Hilfreibungskupplung 37 zum Ankoppeln des Viscokupplungsgehäuses 23 an das Gehäuse 12. Die Verstellvorrichtung 13 läßt zwei Rampenscheiben 25, 26 erkennen, zwischen denen Kugeln 27 liegen. Die Rampenscheibe 25 ist axial abgestützt. Die Rampenscheibe 26 wirkt über eine Druckscheibe 28 axial auf die Hilfskupplung 37 am Gehäuse 23 der Viscokupplung ein, die sich bei Beaufschlagung zunächst an die Reiblamellen 19 anlegt, die federnd abgestützt ist. Hiermit wird das Viscokupplungsgehäuse 23 an das Gehäuse 12 angekoppelt. Bei weiterer Verstellung schließt sich die Reibungskupplung 15.

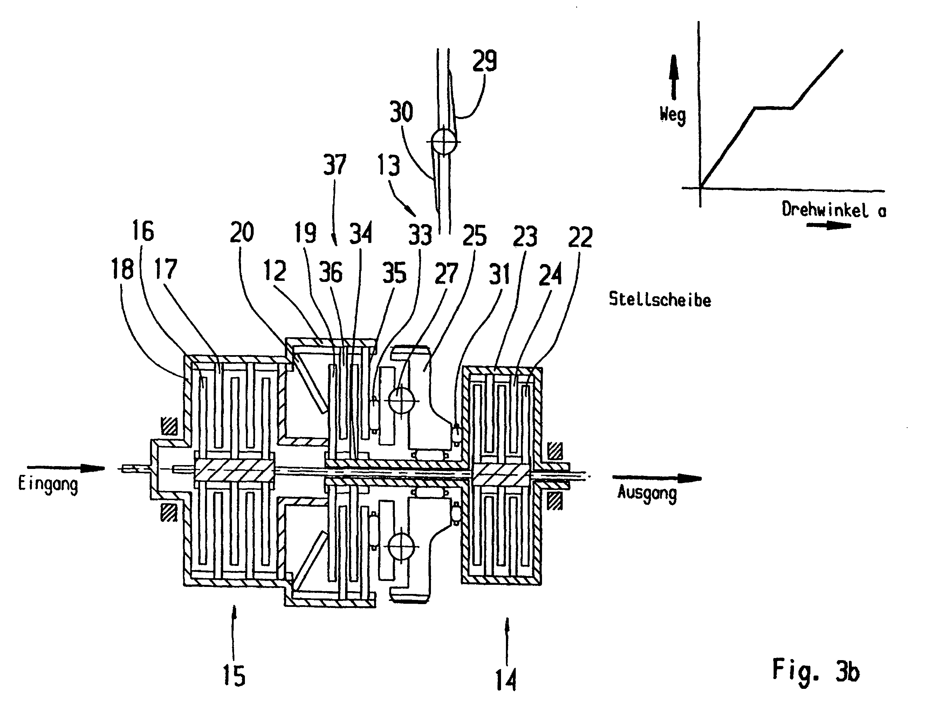

In Figur 3b sind entsprechende Einzelheiten wie in Figur 1a mit gleichen Ziffern dargestellt. In einer Einzelheit ist an den Rampenscheiben der Umfangsverlauf von Kugelrillen 29, 30 erkennbar. Die Rampenscheibe 25 stützt sich über ein Axiallager 31 an einem Wellenabsatz 32 der Welle 11 ab, die Rampenscheibe 26 über ein Axiallager 33 am Viscokupplungsgehäuse 23. In einem Diagramm ist der Axialweg der Rampenscheibe 26 über dem Verdrehwinkel der Rampenscheibe 25 dargestellt, der zunächst der Ankopplung der Viscokupplung dient und anschließend dem Schließen der Reibungskupplung.

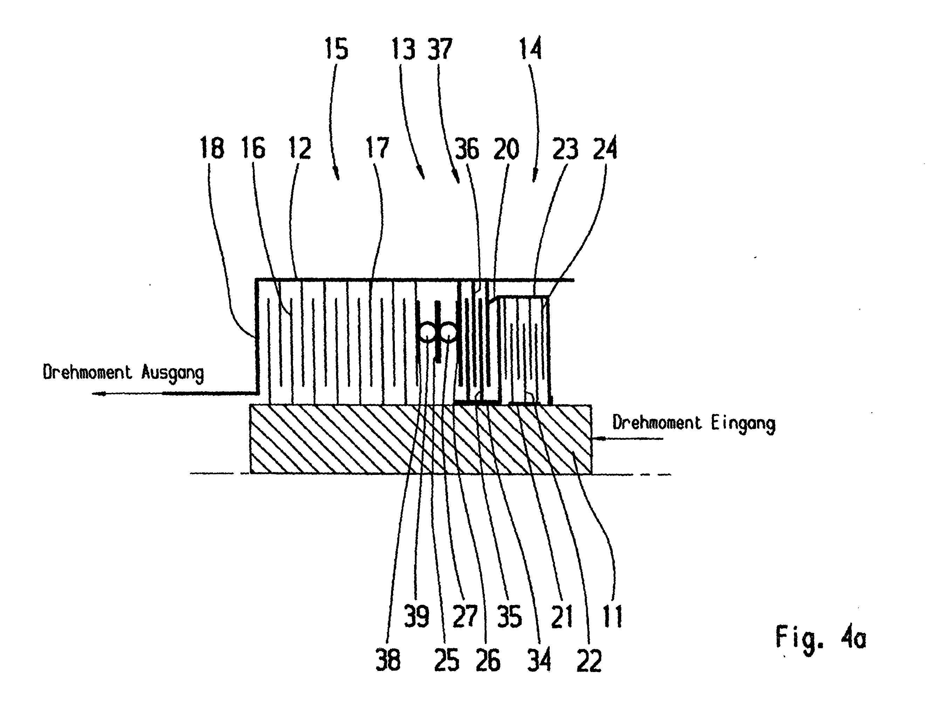

In Figur 4a ist eine Antriebswelle 11 als erstes Kupplungsglied und ein Kupplungsgehäuse 12 als zweites Kupplungsglied erkennbar. Axial hintereinanderliegend sind eine Viscokupplung, eine Axialverstellanordnung 13 und eine Reibungskupplung 15 erkennbar. Innere Reiblamellen 16 der Reibungskupplung sind unmittelbar mit der Welle drehfest verbunden. Äußere Reiblamellen 17 der Reibungskupplung sind unmittelbar mit dem Gehäuse 12 drehfest verbunden. Die zwei Lamellensätze können sich an einer Radialwand 18 des Gehäuses abstützen. Eine erste Reiblamelle 19 ist an einer Tellerfeder 20 abgestützt. Die Viscokupplung zeigt einen Innenlamellenträger 21 mit innenliegenden VC-Lamellen 22, die drehfest gegenüber der Welle 11 sind. Weiterhin ist ein Viscokupplungsgehäuse 23 erkennbar, das als Lamellenträger für äußere VC-Lamellen 24 dient. Das Kupplungsgehäuse 23 ist axial abgestützt. Am Viscokupplungsgehäuse 23 ist ein zusätzlicher Lamellenträger 34 angeordnet, der innere Reiblamellen 35 trägt, die mit äußeren Reiblamellen 36 zusammenwirken, die unmittelbar im Gehäuse 12 drehfest gehalten sind. Diese Reiblamellen bilden eine Hilfsreibungskupplung 37 zum Ankoppeln des Viscokupplungsgehäuses 23 an das Gehäuse 12. Die Verstellvorrichtung 13 läßt drei Rampenscheiben 25, 26, 38 erkennen, zwischen denen Kugeln 27, 39 liegen. Die Rampenscheibe 25 ist axial abgestützt. Die Rampenscheibe 26 wirkt über eine Druckscheibe 28 axial auf die Hilfskupplung 37 am Gehäuse 23 der Viscokupplung ein, die sich bei Beaufschlagung zunächst an die Reiblamellen 19 anlegt, die federnd abgestützt ist. Hiermit wird das Viscokupplungsgehäuse 23 an das Gehäuse 12 angekoppelt. Bei weiterer Verstellung wirkt die Rampenscheibe 38 auf die Reiblamellensätze der Reibungskupplung ein, hierdurch schließt sich die Reibungskupplung 15.

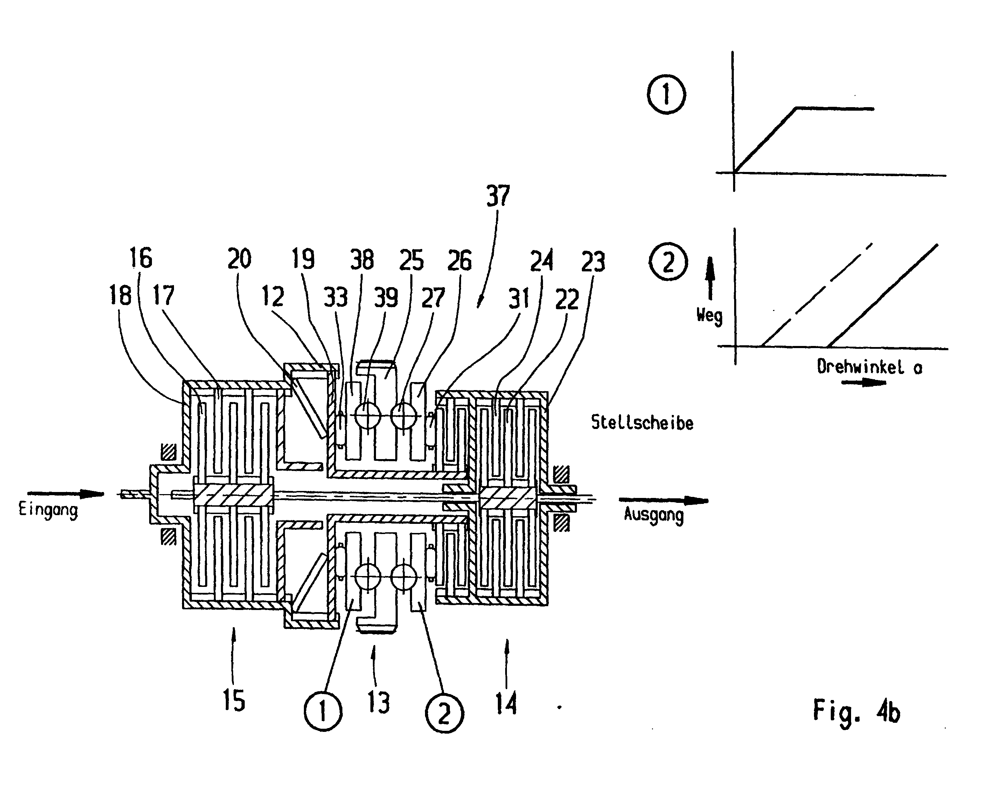

In Figur 4b sind entsprechende Einzelheiten wie in Figur 1a mit gleichen Ziffern dargestellt. In einer Einzelheit ist an den Rampenscheiben der Umfangsverlauf von Kugelrillen 29, 30 erkennbar. Die Rampenscheibe 25 stützt sich über ein Axiallager 31 an einem Wellenabsatz 32 der Welle 11 ab, die Rampenscheibe 26 über ein Axiallager 33 am Viscokupplungsgehäuse 23. In den Diagrammen ist der Axialweg der Rampenscheiben 26 und 38 über den Verdrehwinkel der Rampenscheibe 25 dargestellt, der auch hier zunächst der Ankopplung des Viscokupplungsgehäuses und anschließend dem Schließen der Reibungskupplung dient.

## Patentansprüche

1. Verfahren zur Steuerung einer Kupplung, die der regelbaren Übertragung von Drehmoment dient; die Kupplung umfaßt ein erstes Kupplungsglied (11) und ein zweites Kupplungsglied (12) - insbesondere eine Welle und ein Kupplungsgehäuse -, die relativ drehbar zueinander gelagert sind; die Kupplung umfaßt in Parallelschaltung eine Reibungskupplung (15) und eine Viscokupplung (14); die Reibungskupplung umfaßt zwei Reiblamellensätze (16,17), die Viscokupplung umfaßt zwei VC-Lamellensätze (23,24), die jeweils einem von zwei VC-Lamellenträgern (21,23) zugeordnet sind; das Verfahren ist **dadurch gekennzeichnet,**
**daß** zum Trennen der Kupplung die Reiblamellensätze der Reibungskupplung (15) axial voneinander getrennt werden und einer der VC-Lamellenträger (21,23) der Viscokupplung (14) vollständig von einem der Kupplungsglieder (11,12) entkoppelt wird.

2. Verfahren nach Anspruch 1,
**dadurch gekennzeichnet,**
**daß** zum zunehmenden Schließen der Kupplung zunächst der eine der VC-Lamellenträger der Viscokupplung (14) an eines der Kupplungsglieder reibschlüssig angekoppelt wird, während der andere der VC-Lamellenträger der Viscokupplung (14) mit dem anderen der Kupplungsglieder ständig drehfest verbunden bleibt, und danach die Reibungskupplung geschlossen wird, wobei die Reiblamellensätze der Reibungskupplung mit jeweils einem der beiden Kupplungsglieder ständig drehfest verbunden bleiben.

3. Kupplung zur regelbaren Übertragung von Drehmoment, mit einem ersten Kupplungsglied (11) und einem zweiten Kupplungsglied (12) - insbesondere einer Welle und einem Kupplungsgehäuse -, die relativ drehbar zueinander gelagert sind; die Kupplung umfaßt in Parallelschaltung eine Reibungskupplung (15) und eine Viscokupplung (14); die Reibungskupplung (15) umfaßt zwei Reiblamellensätze (16,17), die Viscokupplung umfaßt zwei VC-Lamellensätze (22,24), die jeweils einem von zwei VC-Lamellenträgern (21,23) zugeordnet sind; die Reiblamellensätze (16,17) der Reibungskupplung (15) sind jeweils drehfest mit dem ersten und zweiten Kupplungsglied (11,12) verbunden und von einer Verstellvorrichtung (13) axial beaufschlagbar und ein erster VC-Lamellenträger (21) der Viscokupplung (14) ist dauernd drehfest mit dem ersten der Kupplungsglieder (11) verbunden und ein zweiter VC-Lamellenträger (23) der Viscokupplung ist mit dem zweiten Kupplungsglied entkoppelbar verbunden, wobei eine Axialverstellvorrichtung (13) den zweiten VC-Lamellenträger (23) der Viscokupplung reibschlüssig an- und abkoppelt und die Reiblamellensätze (16,17) der Reibungskupplung schließt und löst.

4. Kupplung nach Anspruch 3,
**dadurch gekennzeichnet,**
**daß** die Viscokupplung (14) ein separates Viscokupplungsgehäuse (23) aufweist, das den an- und abkoppelbaren VC-Lamellenträger bildet.

5. Kupplung nach Anspruch 3 oder 4,
**dadurch gekennzeichnet,**
**daß** Radialwände des Viscokupplungsgehäuses (23) mit im zweiten Kupplungsglied gehaltenen Außenlamellen zur Ankopplung des Viscokupplungsgehäuses (23) zusammenwirken.

6. Kupplung nach einem der Ansprüche 3 bis 5,
**dadurch gekennzeichnet,**
**daß** am Viscokupplungsgehäuse (23) ein Lamellenträger (21) mit Innenlamellen (22) zur Ankopplung des Viscokupplungsgehäuses angeordnet ist, die mit im zweiten Kupplungsglied gehaltenen Außenlamellen (24) zusammenwirken.

7. Kupplung nach einem der Ansprüche 3 bis 6,
**dadurch gekennzeichnet,**
**daß** zumindest das Viscokupplungsgehäuse (23) der Viscokupplung (14) axial verschiebbar angeordnet ist und zwischen der Versteilvorrichtung und der Reibungskupplung (15) liegt und daß zwischen dem Viscokupplungsgehäuse (23) der Viscokupplung (14) und den Reiblamellensätzen der Reibungskupplung eine der Wirkung der Verstellvorrichtung entgegenwirkende federnd abgestützte Reiblamelle vorgesehen ist.

8. Kupplung nach einem der Ansprüche 3 bis 6,
**dadurch gekennzeichnet,**
**daß** das Viscokupplungsgehäuse (23) der Viscokupplung (14) und die Reiblamellen zur Ankopplung des Viscokupplungsgehäuses (23) zwischen der Verstellvorrichtung und den Reiblamellensätzen der Reibungskupplung (15) angeordnet sind und daß zwischen den Reiblamellen zur Ankopplung des Viscokupplungsgehäuses (23) und den Reiblamellensätzen der Reibungskupplung (15) eine federnd abgestützte Reiblamelle vorgesehen ist, die der Wirkung der Verstellvorrichtung entgegenwirkt.

9. Kupplung nach einem der Ansprüche 3 bis 6,
**dadurch gekennzeichnet,**
**daß** das Viscokupplungsgehäuse (23) der Viscokupplung axial fest abgestützt ist und daß die Verstellvorrichtung zwischen dem Viscokupplungsgehäuse (23) der Viscokupplung (14) und den Reiblamellensätzen der Reibungskupplung (15) angeordnet ist.

10. Kupplung nach einem der Ansprüche 3 bis 6,
**dadurch gekennzeichnet,**
**daß** das Viscokupplungsgehäuse (23) der Viscokupplung (14) axial fest abgestützt ist und daß die Verstellvorrichtung zwischen dem Viscokupplungsgehäuse (23) der Viscokupplung und den Reiblamellen zur Ankopplung des Viscokupplungsgehäuses (23) angeordnet ist und zwischen den Reiblamellen zur Ankopplung des Viscokupplungsgehäuses (23) und den Reiblamellensätzen der Reibungskupplung (15) eine federnd abgestützte Reiblamelle angeordnet ist, die der Wirkung der Verstellvorrichtung entgegenwirkt.

11. Kupplung nach einem der Ansprüche 3 bis 6,
**dadurch gekennzeichnet,**
**daß** das Viscokupplungsgehäuse (23) der Viscokupplung (14) axial fest abgestützt ist und daß die Verstellvorrichtung zwische den Reiblamellen zur Ankopplung des Viscokupplungsgehäuses (23) und den Reiblamellensätzen der Reibungskupplung angeordnet ist.

12. Kupplung nach einem der Ansprüche 3 bis 11,
**dadurch gekennzeichnet,**
**daß** die Veratellvorrichtung (13) zumindest aus zwei stehenden Rampenscheiben (25,26) besteht, die um einen begrenzten Drehwinkel gegeneinander verdrehbar sind und die sich unmittelbar oder mittelbar aneinander abstützen und bei relativer Verdrehung eine relative axiale Spreizung zueinander erfahren.

13. Kupplung nach einem der Ansprüche 3 bis 11,
**dadurch gekennzeichnet,**
**daß** die Verstellvorrichtung (13) zumindest aus drei stehenden Rampenscheiben (25,26,38) besteht, die um einen begrenzten Drehwinkel gegeneinander verdrehbar sind und sich mittelbar oder unmittelbar aneinander abstützen und die bei relativer Verdrehung zueinander eine relative axiale Spreizung zueinander erfahren.

14. Kupplung nach Anspruch 13,
**dadurch gekennzeichnet,**
**daß** die mittlere der drei Rampenscheiben verdrehbar ist.

15. Kupplung nach einem der Ansprüche 12 bis 14,
**dadurch gekennzeichnet,**
**daß** sich die Rampenscheiben (25,26,38) jeweils über zumindest drei in paarigen Kugelrillen (29,30) veränderlicher Tiefe gehaltenen Kugeln (27) aneinander abstützen.

16. Kupplung nach einem der Ansprüche 13 bis 15,
**dadurch gekennzeichnet,**
**daß** von den drei Rampenscheiben (25,26,38) die mittlere axial festgehalten ist.

17. Kupplung nach einem der Ansprüche 12 bis 16,
**dadurch gekennzeichnet,**
**daß** die Abspreizung der auf die Ankopplung des Viscokupplungsgehäuses (23) einwirkende Rampenscheibe bei einem anfänglichen Verdrehwinkel erfolgt, während die Abspreizung der auf die Reibungskupplung (15) einwirkenden Rampenscheibe bei einem sich daran anschließenden Verdrehwinkel erfolgt.

## Claims

1. A method of controlling a coupling for controllably transmitting torque; the coupling comprises a first coupling member (11) and a second coupling member (12) - in particular a shaft and a coupling housing - which are supported so as to be rotatable relative to one another; the coupling comprises a friction coupling (15) and a viscous coupling (14) switched in parallel; the friction coupling comprises two sets of friction plates (16, 17) and the viscous coupling comprises two sets of VC plates (22, 24) each associated with one of two VC plate carriers (21, 23); the method is **characterised in**
**that** for disengaging the coupling, the sets of friction plates of the friction coupling (15) are axially separated from one another and that one of the VC plate carriers (21, 23) of the viscous coupling (14) is completely disconnected from one of the coupling members (11, 12).

2. A method according to claim 1,
**characterised in**
**that** for increasingly engaging the coupling, first the one of the VC plate carriers of the viscous coupling (14) is coupled with one of the coupling members in a friction-locking way, whereas the other one of the VC plate carriers of the viscous coupling (14) remains permanently connected in a rotationally fast way to the other one of the coupling members, and that thereafter the friction coupling is engaged, with the sets of friction plates of the friction coupling remaining permanently connected in a rotationally fast way with one of the two coupling members.

3. A coupling for controllably transmitting torque, having a first coupling member (11) and a second coupling member (12) - in particular a shaft and a coupling housing - which are supported so as to be rotatable relative to one another; the coupling comprises a friction coupling (15) and a viscous coupling (14) switched in parallel; the friction coupling (15) comprises two sets of friction plates and (16, 17), the viscous coupling comprises two sets of VC plates (22, 24) which are each associated with one of two VC plate carriers (21, 23); the sets of friction plates (16, 17) of the friction coupling (15) are each connected in a rotationally fast way to the first and the second coupling member (11, 12) and axially loadable by an adjusting device (13), and a first VC plate carrier (21) of the viscous coupling (14) is permanently connected in a rotationally fast way to the first one of the coupling members (11), and a second VC plate carrier (23) of the viscous coupling is disconnectably connected to the second coupling member, with an axial adjusting device(13) connecting and disconnecting the second VC plate carrier (23) of the viscous coupling in a friction locking way and closing and releasing the sets of friction plates (16, 17) of the friction coupling.

4. A coupling according to claim 3,
**characterised in**
**that** the viscous coupling (14) comprises a separate viscous coupling housing (23) which forms the connectable and disconnectable VC plate carrier.

5. A coupling according to claim 3 or 4,
**characterised in**
**that** radial walls of the viscous coupling housing (23) co-operate with outer plates held in the second coupling member for connecting the viscous coupling housing (23).

6. A coupling according to any one of claims 3 to 5;
**characterised in**
**that** at the viscous coupling housing (23), there is arranged a plate carrier (21) with inner plates (22) for connecting the viscous coupling housing, which inner plates co-operate with outer plates (24) held in the second coupling member.

7. A coupling according to any one of claims 3 to 6,
**characterised in**
**that** at least the viscous coupling housing (23) of the viscous coupling (14) is arranged axially displaceably and is located between the adjusting device and the friction coupling (15) and that between the viscous coupling housing (23) of the viscous coupling (14) and the sets of friction plates of the friction coupling there is provided a resiliently supported friction plate which acts against the effect of the adjusting device.

8. A coupling according to any one of claims 3 to 6,
**characterised in**
**that** the viscous coupling housing (23) of the viscous coupling (14) and the friction plates for connecting the viscous coupling housing (23) are arranged between the adjusting device and the sets of friction plates of the friction coupling (15) and that between the friction plates for connecting the viscous coupling housing (23) and the sets of friction plates of the friction coupling (15) there is provided a resiliently supported friction plate which acts against the effect of the adjusting device.

9. A coupling according to any one of claims 3 to 6,
**characterised in**
**that** the viscous coupling housing (23) of the viscous coupling is axially firmly supported and that the adjusting device is arranged between the viscous coupling housing (23) of the viscous coupling (14) and the sets of friction plates of the friction coupling (15).

10. A coupling according to any one of claims 3 to 6,
**characterised in**
**that** the viscous coupling housing (23) of the viscous coupling (14) is axially firmly supported and that the adjusting device is arranged between the viscous coupling housing (23) of the viscous coupling and the friction plates for connecting the viscous coupling housing (23) and that between the friction plates for connecting the viscous coupling housing (23) and the sets of friction plates of the friction coupling (15) there is arranged a resiliently supported friction plate which acts against the effect of the adjusting device.

11. A coupling according to any one of claims 3 to 6,
**characterised in**
**that** the viscous coupling housing (23) of the viscous coupling (14) is axially firmly supported and that the adjusting device is arranged between the friction plates for connecting the viscous coupling housing (23) and the sets of friction plates of the friction coupling.

12. A coupling according to any one of claims 3 to 11,
**characterised in**
**that** the adjusting device (13) consists of at least two upright ramp discs (25, 26) which are rotatable relative to one another by a limited angle of rotation and which are either directly or indirectly supported on one another and which, when rotating relative to one another, are axially spread apart from one another.

13. A coupling according to any one of claims 3 to 11,
**characterised in**
**that** the adjusting device (13) consists of at least three upright ramp discs (25, 26, 38) which are rotatable relative to one another by a limited angle of rotation and which are either indirectly or directly supported on one another and which, when rotating relative to one another, are axially spread apart from one another.

14. A coupling according to claim 13,
**characterised in**
**that** the middle one of the three ramp discs is rotatable.

15. A coupling according to any one of claims 12 to 14,
**characterised in**
**that** the ramp discs (25, 26, 38) are supported relative to one another by at least three balls (27) held in pairs of ball grooves (29, 30) of variable depth.

16. A coupling according to any one of claims 13 to 15,
**characterised in**
**that** of the three ramp discs (25, 26, 38), the middle one is held axially.

17. A coupling according to any one of claims 12 to 16,
**characterised in**
**that** the spread of the ramp disc acting on the connection of the viscous coupling housing (23) is effected at an initial angle of rotation, whereas the spread of the ramp disc acting on the friction coupling (15) is effected at a subsequent angle of rotation.

## Revendications

1. Procédé pour commander un embrayage qui sert à la transmission régulée d'un couple de rotation, comportant un premier organe d'embrayage (11) et un deuxième organe d'embrayage (12), en particulier un arbre et un carter d'embrayage, qui sont montés mobiles en rotation l'un par rapport à l'autre, comprenant un montage parallèle d'un embrayage à friction (15) et d'un visco-accouplement (14), l'embrayage à friction comprenant deux lots de lamelles de friction (16, 17), le visco-accouplement comprenant deux lots de lamelles VC (22, 24) qui sont associés chacun à l'un de deux portes-lamelles VC (21, 23), **caractérisé en ce que**
pour séparer l'embrayage, on sépare axialement les lots de lamelles de friction de l'embrayage à friction (15) l'un de l'autre, et on désaccouple l'un des porte-lamelles VC (21, 23) du visco-accouplement (14) complètement depuis l'un des organes d'embrayage (11, 12).

2. Procédé selon la revendication 1, **caractérisé en ce que** pour la fermeture progressive de l'embrayage, on accouple tout d'abord l'un des porte-lamelles VC du visco-accouplement (14) par coopération de friction avec l'un des organes d'embrayage, tandis que l'autre porte-lamelles VC du visco-accouplement (14) reste en permanence relié solidairement en rotation à l'autre organe d'embrayage, et ensuite on ferme l'embrayage à friction, les lots de lamelles de friction de l'embrayage à friction restant en permanence reliés solidairement en rotation à l'un des deux organes d'embrayage.

3. Embrayage pour la transmission régulée d'un couple de rotation, comportant un premier organe d'embrayage (11) et un deuxième organe d'embrayage (12), en particulier un arbre et un carter d'embrayage, qui sont montés mobiles en rotation l'un par rapport à l'autre, comprenant un montage parallèle d'un embrayage à friction (15) et d'un visco-accouplement (14), l'embrayage à friction comprenant deux lots de lamelles de friction (16, 17), le visco-accouplement comprenant deux lots de lamelles VC (22, 24) qui sont associés chacun à l'un de deux portes-lamelles VC (21, 23), dans lequel les lots de lamelles de friction (16, 17) de l'embrayage à friction (15) sont reliés chacun solidairement en rotation au premier et au deuxième organe d'embrayage (11, 12) et susceptibles d'être sollicités axialement par un dispositif de déplacement (13), un premier porte-lamelles VC (21) du visco-accouplement (14) étant relié en permanence solidairement en rotation au premier organe d'embrayage (11), et un deuxième porte-lamelles VC (23) du visco-accouplement étant relié avec faculté de désaccouplement au deuxième organe d'embrayage, et dans lequel un dispositif de déplacement axial (13) accouple et désaccouple par coopération de friction le deuxième porte-lamelles VC (23) du visco-accouplement et ferme et ouvre les lots de lamelles de friction (16, 17) de l'embrayage à friction.

4. Embrayage selon la revendication 3, **caractérisé en ce que** le visco-accouplement (14) comprend un carter de visco-accouplement séparé (23) qui forme le porte-lamelles VC susceptible d'être accouplé et désaccouplé.

5. Embrayage selon l'une ou l'autre des revendications 3 et 4, **caractérisé en ce que** des parois radiales du carter de visco-accouplement (23) coopèrent avec des lamelles extérieures, retenues dans le deuxième organe d'embrayage, pour accoupler le carter de visco-accouplement (23).

6. Embrayage selon l'une des revendications 3 à 5, **caractérisé en ce qu'**il est prévu sur le carter de visco-accouplement (23) un porte-lamelles (21) comportant des lamelles intérieures (22) pour accoupler le carter de visco-accouplement, qui coopèrent avec des lamelles extérieures (24) retenues dans le deuxième organe d'embrayage.

7. Embrayage selon l'une des revendications 3 à 6, **caractérisé en ce qu'**au moins le carter (23) du visco-accouplement (14) est agencé mobile en translation axiale et se trouve entre le dispositif de déplacement et l'embrayage à friction (15), et **en ce qu'**il est prévu, entre le carter (23) du visco-accouplement (14) et les lots de lamelles de friction de l'embrayage à friction, une lamelle de friction en appui élastique et s'opposant à l'effet du dispositif de déplacement.

8. Embrayage selon l'une des revendications 3 à 6, **caractérisé en ce que** le carter (23) du visco-accouplement (14) et les lamelles de friction pour accoupler le carter de visco-accouplement (23) sont agencés entre le dispositif de déplacement et les lots de lamelles de friction de l'embrayage à friction (15), et en qu'il est prévu, entre les lamelles de friction pour accoupler le carter (23) du visco-accouplement (14) et les lots de lamelles de friction de l'embrayage à friction (15), une lamelle de friction en appui élastique qui s'oppose à l'effet du dispositif de déplacement.

9. Embrayage selon l'une des revendications 3 à 6, **caractérisé en ce que** le carter (23) du visco-accouplement est soutenu axialement de manière fixe, et **en ce que** le dispositif de déplacement est agencé entre le carter (23) du visco-accouplement (14) et les lots de lamelles de friction de l'embrayage à friction (15).

10. Embrayage selon l'une des revendications 3 à 6, **caractérisé en ce que** le carter (23) du visco-accouplement (14) soutenu axialement de manière fixe, et **en ce que** le dispositif de déplacement est agencé entre le carter (23) du visco-accouplement et les lamelles de friction pour accoupler le carter (23), et **en ce qu'**il est prévu, entre les lamelles de friction pour accoupler le carter (23) du visco-accouplement et les lots de lamelles de friction de l'embrayage à friction (15), une lamelle de friction en appui élastique qui s'oppose à l'effet du dispositif de déplacement.

11. Embrayage selon l'une des revendications 3 à 6, **caractérisé en ce que** le carter (23) du visco-accouplement (14) soutenu axialement de manière fixe, et **en ce que** le dispositif de déplacement est agencé entre les lamelles de friction pour accoupler le carter (23) et les lots de lamelles de friction de l'embrayage à friction.

12. Embrayage selon l'une des revendications 3 à 11, **caractérisé en ce que** le dispositif de déplacement (13) est constitué par au moins deux disques à rampe dressés (25, 26) qui sont mobiles en rotation l'un par rapport à l'autre d'un angle de rotation limité et qui prennent appui directement ou indirectement l'un contre l'autre et qui subissent un écartement axial relatif lors d'une rotation relative.

13. Embrayage selon l'une des revendications 3 à 11, **caractérisé en ce que** le dispositif de déplacement (13) est constitué par au moins trois disques à rampe dressés (25, 26, 38) qui sont mobiles en rotation les uns par rapport aux autres d'un angle de rotation limité et qui prennent appui directement ou indirectement les uns contre les autres et qui subissent un écartement axial relatif lors d'une rotation relative.

14. Embrayage selon la revendication 13, **caractérisé en ce que** le disque médian des trois disques à rampe est mobile en rotation.

15. Embrayage selon l'une des revendications 12 à 14, **caractérisé en ce que** les disques à rampe (25, 26, 38) prennent appui les uns contre les autres chacun via au moins trois billes (27) retenues dans des rainures à billes (29, 30) disposées par paire et présentant une profondeur variable.

16. Embrayage selon l'une des revendications 13 à 15, **caractérisé en ce que** parmi les trois disques à rampes (25, 26, 38) le disque médian est retenu axialement.

17. Embrayage selon l'une des revendications 12 à 16, **caractérisé en ce que** l'écartement du disque à rampe agissant sur l'accouplement du carter (23) du visco-accouplement s'effectue au début d'un angle de rotation, tandis que l'écartement du disque à rampe agissant sur l'embrayage à friction (15) s'effectue sur un angle de rotation successif.
